# EUROPÄISCHE PATENTSCHRIFT

(11) **EP 2 847 059 B1**
(45) Veröffentlichungstag und Bekanntmachung des Hinweises auf die Patenterteilung: **15.02.2017**
(21) Anmeldenummer: 13717428.0
(22) Anmeldetag: 14.03.2013
(51) Int. Cl.: B62D 5/04, F16C 25/08, F16C 27/04, F16H 25/24

(54) **KUGELMUTTERLAGERUNG MIT WELLFEDER**
BALL NUT BEARING WITH WAVE SPRING
MONTAGE D'ÉCROU SPHÉRIQUE À RONDELLE ONDULÉE

(30) Priorität: 10.05.2012 DE 102012009183
(43) Veröffentlichungstag der Anmeldung: 18.03.2015
(73) Patentinhaber: ThyssenKrupp Presta AG, 9492 Eschen (LI); ThyssenKrupp AG, 45143 Essen (DE)
(72) Erfinder: LÁSZLÓ, Gergely, 73734 Esslingen-Berkheim (DE)
(74) Vertreter: ThyssenKrupp Intellectual Property GmbH
(86) Internationale Anmeldenummer: PCT/EP2013/000771
(87) Internationale Veröffentlichungsnummer: WO 2013/167215

(56) Entgegenhaltungen:
- EP-A1- 0 303 148
- WO-A1-2010/085346
- DE-A1-102010 029 266
- DE-A1-102010 038 715
- US-A1- 2011 127 742

## Beschreibung

Die vorliegende Erfindung betrifft ein Kugelumlaufgetriebe für eine Lenkung eines Kraftfahrzeugs mit einer mittels eines Lagers in einem Gehäuse gelagerten Mutter, wobei an jeder Stirnseite des Lagers zwischen dem Lager und dem Gehäuse mindestens ein Federelement angeordnet ist.

Das Dokument DE 10 2007 048 075 A1 beschreibt ein Kugelumlaufgetriebe mit einem einseitig gefederten Lager. Die einseitig im Lager anliegende Feder hat die Aufgabe, Kippmomente und eine Wärmeausdehnung auszugleichen und gleichzeitig das Lager in dem Gehäuse zu fixieren. Aufgrund der einseitigen Federung des Lagers können mit dieser Konstruktion keine Stöße aufgenommen werden, die in beiden Richtungen auf die Kugelmutter einwirken können.

Das Dokument EP 2 080 934 B1 zeigt eine einseitig federnde Lagerung mit Tellerfedern, deren Außendurchmesser größer ist als der Außendurchmesser des benachbarten Lageraußenrings.

Ein weiteres Kugelumlaufgetriebe ist aus der Druckschrift DE 10 2010 029 266 A1 bekannt. Bei diesem Dokument sind zwei Federelemente vorgesehen, von denen je eines an der Stirnseite des Lageraußenrings zwischen dem Außenring und dem benachbarten Gehäuse angeordnet ist. Auf diese Weise kann das Lager in beiden Axialrichtungen bei Stoßbelastung gegen die Federkraft ausweichen. Im Ruhezustand bei montiertem Lager sind die beiden beidseits des Lagers vorgesehenen Federelemente vorgespannt und befinden sich in diesem Zustand im progressiven Bereich ihrer Kennlinie. Die Federelemente selbst weisen einen Außenradius auf, der etwa dem Außenradius des Lageraußenrings entspricht, sowie einen Innenradius, der dem Innenradius des Lageraußenrings entspricht. Der Lageraußenring überdeckt also die ringförmigen Federelemente, die als Tellerfedern oder Wellfedern ausgebildet sein können, vollständig. Für die vorgesehene Funktion der angefederten Lagerung in dieser Druckschrift ist es entscheidend, dass das Lager in dem beschriebenen Ruhezustand mittig zwischen den beiden Ringflächen sitzt, die das Gehäuse als Widerlager für die Federelemente aufweist. Der vorgesehene Federweg bei derartigen Lagerungen ist relativ gering. Er liegt beidseits des Lagers bei jeweils rund 0,1 mm. Problematisch ist bei dieser Lagerung, dass geringfügige Toleranzen der Federelemente dazu führen, dass das Lager im Ruhezustand außermittig zwischen den Anlageflächen des Gehäuses montiert ist. Diese sogenannte Dezentrierung des Lagers kann so weit gehen, dass eines der Federelemente bereits im Ruhezustand ganz oder nahezu vollständig komprimiert ist und der konstruktiv vorgesehene Federweg des Lagers an dieser Seite folglich nicht zur Verfügung steht.

Die Offenlegungsschrift DE 10 2010 038 715 A1 die den nächstliegenden Stand der Technik bildet, zeigt eine Lagerung einer Kugelmutter, bei der der Lageraußenring zwischen zwei Federelementen in Form von planen Federscheiben gehalten ist. Eine elastische Verformung der Federscheiben bei Axialbelastung wird ermöglicht, indem die Federscheiben an ihrem äußeren Rand in einem schmalen Bereich an dem Lageraußenring und an ihrem inneren Rand in einem ebenfalls schmalen Bereich an einem Absatz des Gehäuses anliegen. Bei Axialbelastung wird die jeweilige Federscheibe konisch nach Art einer Tellerfeder verformt.

Es ist deshalb Aufgabe der vorliegenden Erfindung, ein Kugelumlaufgetriebe für eine Kraftfahrzeuglenkung zu schaffen, bei dem der Lageraußenring des Lagers der Kugelmutter in seinem Gehäuse auch bei Toleranzen der verwendeten Federelemente möglichst mittig zwischen den Anlageflächen des Lenkungsgehäuses gelagert ist, so dass zu beiden Axialrichtungen hin etwa der gleiche Federweg zur Verfügung steht, und eine vorteilhafte Kennlinie der Anfederung erzielt werden kann.

Diese Aufgabe wird von einem Kugelumlaufgetriebe mit den Merkmalen des Anspruchs 1 gelöst.

Weil die ringförmigen, metallischen Wellfedern einen kleineren Innenradius aufweisen als der Innenradius des Lageraußenrings, wird eine nicht rein progressive Kennlinie der Federelemente erreicht, da die Federelemente nicht ausschließlich in Axialrichtung komprimiert werden, sondern zusätzlich eine Verkippung erfahren können. Diese Verkippung bewirkt einen linearen Kennlinienverlauf, bei dem Toleranzen der beiden verwendeten Federelemente, wie beispielsweise Toleranzen in der Federkonstante oder Toleranzen in der lichten Höhe der Federelemente im entspannten Zustand ausgeglichen werden. Es zeigt sich, dass der vorteilhafte Effekt besonders bei Verwendung von Wellfedern auftritt. Dabei wird vorzugsweise beidseits des Lageraußenrings jeweils eine Wellfeder verwendet, deren Außenradius kleiner oder gleich dem Außenradius des benachbarten Lageraußenrings ist, deren Innenradius kleiner als Innenradius des Lageraußenrings ist, wobei die sich in Radialrichtung ergebende Breite vorzugsweise zwischen dem 1,3-fachen der Breite des Lagerrings und dem 2,5-fachen der Breite des Lagerrings, vorzugsweise zwischen dem 1,7-fachen und dem 2,2-fachen und insbesondere das 1,9-fache des Lageraußenrings beträgt. Die Breite wird hierbei als Differenz des Außenradius gegenüber dem Innenradius der Feder beziehungsweise des Lageraußenrings gemessen.

Besonders bevorzugt ist, wenn das Verhältnis der Breite b(R) des Lageraußenrings zu der Breite b(F) der Federelemente zwischen 0,3 und 0,7, insbesondere zwischen 0,4 und 0,6 liegt.

Weiter ist bevorzugt, dass diese Verhältnis in einer erfindungsgemäßen Ausführung 0,4 beträgt. In einer anderen Ausführung kann ein Verhältnis von 0,6 bevorzugt sein.

Besonders bevorzugt ist eine ringförmige Anlagefläche des Gehäuses, an der die von dem Lageraußenring weg weisende Außenseite der Wellfeder anliegt, im Außenradius und im Innenradius mit den Abmessungen der Wellfeder übereinstimmend ausgebildet, so dass die Wellfeder dort über ihre radiale Breite abgestützt ist. Das Gehäuse kann dort einen Ringbund, beispielsweise innerhalb einer Montagehülse, oder eine entsprechend gestaltete Passscheibe aufweisen.

Nachfolgend wird ein Ausführungsbeispiel der vorliegenden Erfindung anhand der Zeichnung näher beschrieben.

Es zeigen:
- Figur 1:: einen Ausschnitt aus der Lagerung einer Kugelmutter eines erfindungsgemäßen Kugelumlaufgetriebes in einem Längsschnitt; sowie
- Figur 2:: eine Kennlinie eines Federelements in einem erfindungsgemäßen Kugelumlaufgetriebe mit Veranschaulichung des Arbeitspunktes der Federelemente in montiertem Zustand.

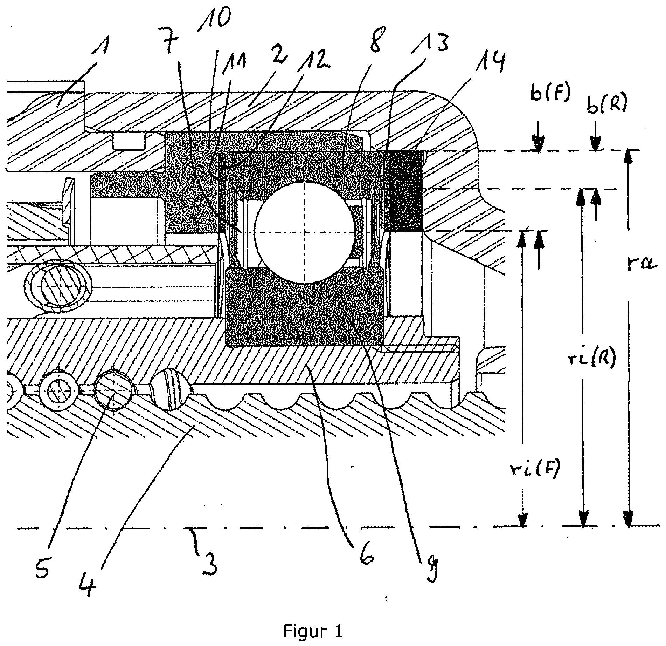

In der Figur 1 ist die Lagerung eines Kugelgewindetriebs aus einer Kraftfahrzeuglenkung in einem Längsschnitt teilweise dargestellt. Das Lenkgetriebe umfasst ein Lenkungsgehäuse 1, das mit einem Gehäusedeckel 2 verschlossen ist. Das Lenkungsgehäuse 1 ist im Wesentlichen rohrförmig ausgebildet, wie dies aus dem Stand der Technik bekannt ist. In dem Lenkungsgehäuse 1 ist in Richtung einer Längsachse 3 verschieblich eine Gewindespindel 4 gelagert. Die Gewindespindel 4 steht über eine Vielzahl von Kugeln 5 mit einer Kugelmutter 6 im Eingriff. Die Kugelmutter 6 wiederum ist mit einem Lager 7 in dem Lenkungsgehäuse 1 gelagert. Eine Drehung der Kugelmutter 6 in dem Lenkungsgehäuse 1 bewirkt eine Längsverschiebung der Gewindespindel 4 in Richtung der Längsachse 3.

Die Längsachse 3 in Figur 1 ist gleichzeitig die Mittelachse der Gewindespindel 4 und damit auch die Symmetrieachse des Wälzlagers 7, dessen Lagermittelpunkt mit der Achse 3 zusammen hält.

Das Lager 7 wiederum weist einen Lageraußenring 8 und einen Lagerinnenring 9 auf. Der Lagerinnenring 9 ist fest in einem Sitz auf der Kugelmutter 6 angeordnet. Der Lageraußenring 8 sitzt in einer Montagehülse 10, die in das Lenkungsgehäuse 1 eingeführt ist. Der Lageraußenring 8 weist einen Außenradius ra und einen Innenradius ri(R) auf. Die Breite des Lageraußenrings 8 ist in der Figur 1 mit b(R) gekennzeichnet. Der Innenradius ri(R) wird dabei an der radial am weitesten innen liegenden Kontaktstelle zwischen dem Lageraußenring 8 und der Wellfeder 12 gemessen. Dieser Innenradius ist nicht notwendig identisch mit der lichten inneren Weite des Lagerinnenrings 8.

In Axialrichtung der Anordnung also in Richtung der Achse 3 ist der Lageraußenring 8 zwischen dem Lenkungsgehäuse 1 und dem Gehäusedeckel 2 federnd gelagert. Hierzu ist in der Montagehülse 10 ein in Axialrichtung weisender Ringbund 11 ausgebildet, an dem eine erste Wellfeder 12 anliegt. Die erste Wellfeder 12 ist im Wesentlichen aus einem streifenförmigen Metallring gefertigt und liegt mit einer Flachseite an dem Ringbund 11 der Montagehülse 10 an. Die andere Flachseite liegt teilweise an der axialen Stirnseite des Lageraußenrings 8 an und die Abmessungen der ersten Wellfeder 12 sind in der Figur 1 angegeben. Der Außenradius der ersten Wellfeder 12 stimmt im Wesentlichen mit dem Außenradius des Lageraußenring 8 überein und ist mit ra bezeichnet. Der Innenradius der ersten Wellfeder 12 ist mit ri(F) bezeichnet und stimmt im Wesentlichen mit dem Innenradius der Montagehülse 10 überein. Der Innenradius r1(F) ist kleiner als der Innenradius des Lageraußenrings 8. Die Breite der ersten Wellfeder 12 ergibt sich aus der Differenz des Außenradius und des Innenradius und ist in der Figur 1 mit b(F) gekennzeichnet.

Auf der anderen Seite des Lageraußenrings ist eine zweite Wellfeder 13 vorgesehen, die baugleich mit der ersten Wellfeder 12 ist. Die zweite Wellfeder 13 liegt an der in Axialrichtung rechten Außenseite des Lageraußenrings 8 an und stützt sich mit ihrer zweiten Flachseite an einer Passscheibe 14 ab. Die Passscheibe 14 entspricht in ihrem Innenradius und ihrem Außenradius den Abmessungen der Wellfeder 13. Der Lageraußenring 8 ist von seiner Breite b(R) her wesentlich schmaler als die Breite b(F) der zweiten Wellfeder 13.

Die Figur 1 zeigt also eine im Wesentlichen zu der Achse 3 rotationssymmetrische Lageranordnung für die Kugelmutter 6, bei der der Lageraußenring 8 über eine erste und eine zweite Wellfeder 12, 13 gegenüber dem Lenkungsgehäuse 1 und dem Gehäusedeckel 2 federnd abgestützt ist. Der ringförmige Bereich mit der Breite b(R) der Stirnflächen des Lageraußenrings 8, der abschnittsweise an den Wellfedern 12 und 13 anliegt, ist schmaler als die Breite b(F) der Wellfedern. Das Verhältnis der beiden Breiten wird nachfolgend als "Überdeckung" bezeichnet. In der Figur 1 beträgt die Überdeckung etwa 0,4.

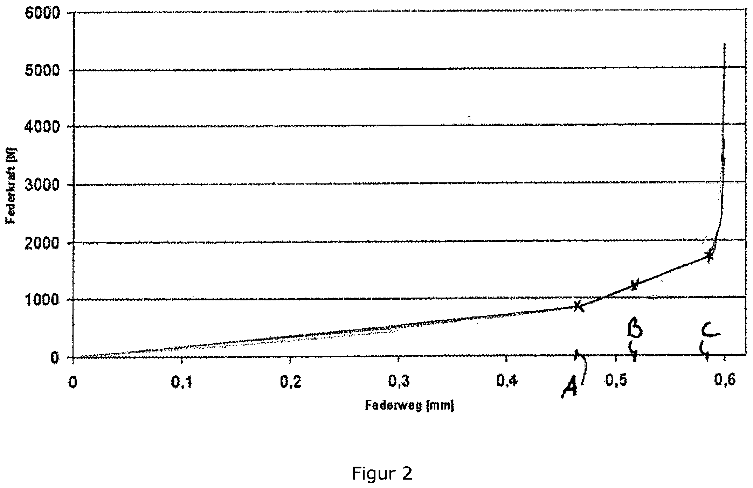

Die Figur 2 zeigt die Kennlinie der Wellfedern 12 und 13 in der Einbausituation gemäß Figur 1.

Der maximale Federweg der Wellfeder beträgt hier 0,6 mm von der vollständig entspannten Stellung bis hin zur flachen Endlage. Ausgehend von der entspannten Lage bei einem Federweg von Null steigt die Federkraft zunächst mit einer Steigung von etwa 1900 N/mm linear an. Dieser Bereich wird nachfolgend "erster linearer Bereich" genannt.

Bei einem Federweg von 0,46 mm, der als Punkt A gekennzeichnet ist, ändert sich die Federkonstante auf etwa 6000 N/mm und ist von A bis zu einem Punkt C bei einem Federweg von 0,58 mm ebenfalls linear. Der Bereich zwischen A und C wird nachfolgend "zweiter linearer Bereich" genannt.

Bei einem Federweg von mehr als 0,58 mm wird die Kennlinie der Wellfeder progressiv, bis sich schließlich bei 0,6 mm an ihren Anschlag kommt. Dieser Bereich wird nachfolgend "progressiver Bereich" genannt.

In der Einbausituation gemäß Figur 1 ist der Abstand zwischen dem Ringbund 11 und der gegenüber liegenden Ringfläche der Passscheibe 14 durch Auswahl der Passscheibe 14 so eingestellt, dass die Wellfedern 12 und 13 jeweils mit einem Federweg von 0,075 mm (75µm) zwischen dem Lageraußenring 8 und der Montagehülse 10 bzw. der Passscheibe 14 eingebaut sind. Die Summe der Dicken der beiden Wellfedern 12 und 13 und des Lageraußenrings 8 in Axialrichtung ist also um 0,15 mm kleiner als der Abstand zwischen dem Ringbund 11 und der Passscheibe 14. Bei dieser Einstellung befinden sich die beiden Wellfedern 12 und 13 jeweils an dem Punkt B ihrer Kennlinie, also in dem zweiten linearen Bereich.

Es zeigt sich, dass sich bei dieser Auslegung der Kennlinien der Wellfedern 12 und 13 und bei der Wahl des Arbeitspunktes B in dem zweiten linearen Bereich ein besonders vorteilhaftes Verhalten der Lagerung in Bezug auf Toleranzen der Wellfedern ergibt. Diese Auslegung bewirkt nämlich, dass sich Toleranzen der Wellfedern nicht oder nur minimal auf die konstruktiv angestrebte mittige Lage des Lagers 7 zwischen der Hülse 10 und der Passscheibe 14 auswirken. Eine eingangs beschriebene nachteilige Dezentrierung des Lagers 7 wird so wirksam verringert.

Beispielsweise können die Wellfedern 12 und 13 eine Toleranz in der Höhe in Axialrichtung in entspanntem Zustand vor dem Einbau aufweisen. Wenn diese Differenz 0,05 mm beträgt, tritt bei der Lagerung nach dem Stand der Technik diese Differenz auch im eingebauten Zustand als Dezentrierung auf. Der Grund hierfür liegt in der beidseits progressiven Kennlinie der verwendeten Federelemente, die das Lager zwangsläufig mittig zwischen sich zentrieren und eine Höhentoleranz der Federelemente deshalb auch im Einbauzustand als Dezentrierung beibehalten. Es entsteht dadurch eine Einbaulage des Lagers, in der zu einer Seite weniger Federweg verfügbar ist als zu der anderen Seite.

Bei der erfindungsgemäßen Lagerung entsteht wegen der linearen Kennlinien eine Kompensation, die dazu führt, dass eine Dezentrierung auch bei einer Höhentoleranz der Wellfedern 12 und 13 nicht oder nur wesentlich geringer als die Höhentoleranz selbst auftritt.

Entsprechendes gilt auch für eine Toleranz der Federkennlinien selbst, die z.B. durch unterschiedliche Dicken der Federn entstehen kann. Auch diese Toleranzen werden weitgehend kompensiert.

Zu beiden Seiten des Lageraußenrings 8 steht dann nahezu der gleiche Federweg zur Abfederung von Stoßbelastungen zur Verfügung.

Die Lage der Übergangspunkte A zwischen dem ersten und dem zweiten linearen Bereich und C zwischen dem zweiten linearen Bereich und dem progressiven Bereich kann durch das Verhältnis von b(R) zu b(F) verändert werden. Bevorzugt werden derzeit Verhältnisse zwischen 0,3 und 0,7, wobei sich sowohl ein Verhältnis von 0,4 als auch in einem anderen Fall ein Verhältnis von 0,6 als vorteilhaft herausgestellt hat.

Es kann allgemein auch vorgesehen sein, dass das Verhältnis der Breite b(R) des Lageraußenrings 8 zu der Breite b(F) der Federelemente 12, 13 zwischen 0,4 und 0,6 liegt.

Es sei noch einmal hervorgehoben, dass der erfindungsgemäße Kugelgewindetrieb seine vorteilhaften Eigenschaften aufgrund der Verwendung von Wellfedern erhält, die in ihrem Außendurchmesser ra den Außendurchmesser des Lageraußenrings 8 nicht überragen und die in ihrem Innendurchmesser kleiner sind als der Lageraußenring 8, so dass sich zwischen den Bauteilen eine Teilüberdeckung und keine vollständige Überdeckung ergibt.

## Patentansprüche

1. Kugelumlaufgetriebe für eine Lenkung eines Kraftfahrzeugs mit einer mittels eines Lagers (7) in einem Gehäuse (1, 2) gelagerten Mutter (4), wobei an jeder Stirnseite des Lagers (7) zwischen einem Lageraußenring (8) und dem Gehäuse (1, 2) mindestens ein ringförmiges Federelement (12, 13) angeordnet, wobei der Lageraußenring einen Außenradius (ra) und einen Innenradius (ri(R)) sowie eine Breite (b(R)) aufweist, **dadurch gekennzeichnet, dass** die Federelemente (12, 13) Wellfedern sind, die einen Außenradius (ra) und einen Innenradius (ri(F)) sowie eine Breite (b(F)) aufweisen, wobei der Innenradius (ri(F)) des Federelements (12, 13) kleiner ist als der Innenradius (ri(R)) des Lageraußenrings.

2. Kugelumlaufgetriebe nach Anspruch 1, **dadurch gekennzeichnet, dass** das Verhältnis der Breite (b(R)) des Lageraußenrings (8) zu der Breite (b(F)) der Federelemente (12, 13) zwischen 0,3 und 0,7 liegt.

3. Kugelumlaufgetriebe nach einem der vorhergehenden Ansprüche, **dadurch gekennzeichnet, dass** das Verhältnis der Breite (b(R)) des Lageraußenrings (8) zu der Breite (b(F)) der Federelemente (12, 13) zwischen 0,4 und 0,6 liegt.

4. Kugelumlaufgetriebe nach einem der vorhergehenden Ansprüche, **dadurch gekennzeichnet, dass** das Verhältnis der Breite (b(R)) des Lageraußenrings (8) zu der Breite (b(F)) der Federelemente (12, 13) 0,4 beträgt.

5. Kugelumlaufgetriebe nach einem der vorhergehenden Ansprüche, **dadurch gekennzeichnet, dass** das Verhältnis der Breite (b(R)) des Lageraußenrings (8) zu der Breite (b(F)) der Federelemente (12, 13) 0,6 beträgt.

6. Kugelumlaufgetriebe nach einem der vorhergehenden Ansprüche, **dadurch gekennzeichnet, dass** wenigstens eine ringförmige Anlagefläche des Gehäuses (1, 2), an der die von dem Lageraußenring (8) weg weisende Außenseite der Wellfeder (12, 13) anliegt, im Außenradius und im Innenradius mit den Abmessungen der Wellfeder (12, 13) übereinstimmend ausgebildet ist, so dass die Wellfeder (12, 13) an der Anlagefläche über ihre radiale Breite (b(F)) abgestützt ist.

7. Kugelumlaufgetriebe nach Anspruch 6, **dadurch gekennzeichnet, dass** die wenigstens eine Anlagefläche ein Ringbund (11) und/oder eine Passscheibe (14) ist.

## Claims

1. Recirculating ball mechanism for a steering system of a motor vehicle having a nut (4) which is mounted in a housing (1, 2) by means of a bearing (7), at least one annular spring element (12, 13) being arranged on each end side of the bearing (7) between a bearing outer ring (8) and the housing (1, 2), the bearing outer ring comprising an outer radius (ra), an inner radius (ri(R)) and a width (b(R)), **characterized in that** the spring elements (12, 13) are corrugated springs which comprise an outer radius (ra), an inner radius (ri(F)) and a width (b(F)), the inner radius (ri(F)) of the spring element (12, 13) being smaller than the inner radius (ri(R)) of the bearing outer ring.

2. Recirculating ball mechanism according to Claim 1, **characterized in that** the ratio of the width (b(R)) of the bearing outer ring (8) to the width (b(F)) of the spring elements (12, 13) lies between 0.3 and 0.7.

3. Recirculating ball mechanism according to either of the preceding claims, **characterized in that** the ratio of the width (b(R)) of the bearing outer ring (8) to the width (b(F)) of the spring elements (12, 13) lies between 0.4 and 0.6.

4. Recirculating ball mechanism according to one of the preceding claims, **characterized in that** the ratio of the width (b(R)) of the bearing outer ring (8) to the width (b(F)) of the spring elements (12, 13) is 0.4.

5. Recirculating ball mechanism according to one of the preceding claims, **characterized in that** the ratio of the width (b(R)) of the bearing outer ring (8) to the width (b(F)) of the spring elements (12, 13) is 0.6.

6. Recirculating ball mechanism according to one of the preceding claims, **characterized in that** at least one annular bearing face of the housing (1, 2), against which annular bearing face that outer side of the corrugated spring (12, 13) which points away from the bearing outer ring (8) lies, is configured such that the outer radius and the inner radius correspond to the dimensions of the corrugated spring (12, 13), with the result that the corrugated spring (12, 13) is supported on the bearing face over its radial width (b(F)).

7. Recirculating ball mechanism according to Claim 6, **characterized in that** the at least one bearing face is an annular collar (11) and/or a shim ring (14).

## Revendications

1. Engrenage à circulation de billes pour une direction d'un véhicule automobile avec un écrou (4) monté au moyen d'un palier (7) dans un boîtier (1, 2), dans lequel au moins un élément de ressort annulaire (12, 13) est disposé sur chaque côté frontal du palier (7) entre une bague extérieure de palier (8) et le boîtier (1, 2), dans lequel la bague extérieure de palier présente un rayon extérieur (ra) et un rayon intérieur (ri(R)) ainsi qu'une largeur (b(R)), **caractérisé en ce que** les éléments de ressort (12, 13) sont des ressorts ondulés, qui présentent un rayon extérieur (ra) et un rayon intérieur (ri(F)) ainsi qu'une largeur (b(F)), dans lequel le rayon intérieur (ri(F)) de l'élément de ressort (12, 13) est plus petit que le rayon intérieur (ri(R)) de la bague extérieure de palier.

2. Engrenage à circulation de billes selon la revendication 1, **caractérisé en ce que** le rapport de la largeur (b(R)) de la bague extérieure de palier (8) à la largeur (b(F)) des éléments de ressort (12, 13) se situe entre 0,3 et 0,7.

3. Engrenage à circulation de billes selon l'une quelconque des revendications précédentes, **caractérisé en ce que** le rapport de la largeur (b(R)) de la bague extérieure de palier (8) à la largeur (b(F)) des éléments de ressort (12, 13) se situe entre 0,4 et 0,6.

4. Engrenage à circulation de billes selon l'une quelconque des revendications précédentes, **caractérisé en ce que** le rapport de la largeur (b(R)) de la bague extérieure de palier (8) à la largeur (b(F)) des éléments de ressort (12, 13) vaut 0,4.

5. Engrenage à circulation de billes selon l'une quelconque des revendications précédentes, **caractérisé en ce que** le rapport de la largeur (b(R)) de la bague extérieure de palier (8) à la largeur (b(F)) des éléments de ressort (12, 13) vaut 0,6.

6. Engrenage à circulation de billes selon l'une quelconque des revendications précédentes, **caractérisé en ce qu'**au moins une face d'appui annulaire du boîtier (1, 2), sur laquelle s'applique le côté extérieur du ressort ondulé (12, 13) orienté à l'opposé de la bague extérieure de palier (8), est formée en concordance de rayon extérieur et de rayon intérieur avec les dimensions du ressort ondulé (12, 13), de telle manière que le ressort ondulé (12, 13) soit supporté sur la face d'appui sur sa largeur radiale (b(F)).

7. Engrenage à circulation de billes selon la revendication 6, **caractérisé en ce que** ladite au moins une face d'appui est un collet annulaire (11) et/ou une rondelle d'ajustage (14).
